# DEMANDE DE BREVET EUROPEEN

(11) **EP 4 485 865 A1**
(43) Date de publication de la demande: **01.01.2025**
(21) Numéro de dépôt: 24183526.3
(22) Date de dépôt: 20.06.2024
(51) Int. Cl.: H04L 12/18, H04L 51/214, H04L 51/18

(54) **PROCÈDÈ ET DISPOSITIF D AIDE AU DÉSABONNEMENT À UN BULLETIN ÉLECTRONIQUE D'INFORMATION**

(30) Priorité: 27.06.2023 FR 2306729
(71) Demandeur: Orange, 92130 Issy-les-Moulineaux (FR)
(72) Inventeur: GIDON, Maryline, 92326 Chatillon (FR); MARIE, Tiphaine, 92326 Chatillon (FR); BOURGE, Fabrice, 92326 Chatillon (FR)

(57) **Abrégé**

L'invention concerne un procédé d'aide au désabonnement à un bulletin électronique d'information périodique, ledit bulletin étant reçu par un terminal électronique d'un utilisateur sous la forme de courriels, ledit procédé étant mis en oeuvre par un dispositif d'aide au désabonnement et caractérisé en ce qu'il comprend les étapes suivantes :
- caractérisation d'un courriel reçu par ledit terminal en tant que courriel dudit bulletin ;
- proposition de désabonnement audit bulletin restituée audit utilisateur.

## Description

### 1. Domaine de l'invention

L'invention se rapporte au domaine des télécommunications et concerne plus particulièrement les services de communication exécutés sur un terminal électronique tel qu'un ordinateur personnel.

### 2. Art Antérieur

Il est estimé qu'environ 300 à 500 milliards de courriels sont envoyés chaque jour à l'échelle de la planète. L'impact environnemental d'un seul courriel est négligeable en raison de sa petite taille en termes de données et de la quantité d'énergie nécessaire pour le transmettre (environ 4 g de CO2). Cependant, lorsque l'on considère l'énorme quantité de courriels envoyés chaque jour dans le monde, l'empreinte carbone totale devient significative.

Les bulletins électroniques d'information (en anglais newsletters) peuvent représenter une part importante du trafic des courriels. Or certaines de ces publications peuvent ne pas être sollicitées ou plus souhaitées par l'utilisateur. Actuellement, la loi oblige un expéditeur d'un bulletin électronique d'information à fournir un lien de « désabonnement » dans son contenu pour qu'un abonné puisse ne plus recevoir ces courriels non ou plus désirés. Cependant, le taux de désabonnement reste très faible. En effet, le processus de désabonnement peut être vu par l'abonné comme du temps perdu. Il est souvent plus simple pour lui de continuer à recevoir les courriels sans les lire. L'abonné peut également être tenté de déclarer le courriel du bulletin électronique d'information comme courriel indésirable (c'est-à-dire comme « spam »). Or, Il est préférable de se désabonner plutôt que de marquer le courriel du bulletin électronique d'information comme spam, car le marquage abusif de courriels légitimes comme spam peut nuire aux expéditeurs légitimes et perturber les filtres « anti-spam » pour d'autres utilisateurs.

Force est de constater qu'il n'existe pas de solution technique permettant d'aider un utilisateur à se désabonner à un bulletin électronique d'information.

### 3. Exposé de l'invention

L'invention vient améliorer l'état de la technique et propose à cet effet un procédé d'aide au désabonnement à un bulletin électronique d'information, ledit bulletin étant reçu par un terminal électronique d'un utilisateur sous la forme de courriels, ledit procédé étant mis en oeuvre par un dispositif d'aide au désabonnement et caractérisé en ce qu'il comprend les étapes suivantes :
- caractérisation d'un courriel reçu par ledit terminal en tant que courriel dudit bulletin ;
- proposition de désabonnement audit bulletin restituée audit utilisateur.

Avantageusement, la solution permet de traiter automatiquement les courriels reçus par un terminal électronique d'un utilisateur afin de détecter ceux émis par un bulletin électronique d'information et de proposer, le cas échéant, un désabonnement au bulletin électronique d'information. A noter que les courriels émis par le bulletin électronique d'information peuvent être émis à intervalle de temps régulier (périodiquement) ou non.

Un avantage de la solution proposée est qu'elle est simple à implémenter puisqu'il suffit, outre le terminal dont dispose déjà l'utilisateur, d'une machine de calcul (éventuellement celle déjà présente dans le terminal) pour caractériser un courriel reçu.

Selon un mode de mise en oeuvre particulier de l'invention, un procédé tel que décrit ci-dessus est caractérisé en ce que la caractérisation dudit courriel reçu par ledit terminal en tant que courriel dudit bulletin est déterminée en fonction du résultat d'une analyse du contenu et/ou du titre dudit courriel reçu.

Ce mode de réalisation permet de déterminer qu'un courriel reçu par un terminal électronique correspond à un courriel d'un bulletin électronique d'information. Concrètement le procédé détermine qu'un courriel correspond à un courriel d'un bulletin électronique d'information en fonction du résultat d'une analyse du contenu et/ou du titre du courriel reçu, par exemple, lorsque le courriel comprend un contenu particulier comme un lien hypertexte nommé « se désabonner » ou bien un titre comprenant un ou plusieurs mots (newsletter, veille, publicité, catalogue, etc.) indiquant sans ambiguïté que le courriel correspond à une publication d'un bulletin électronique d'information.

Selon un mode de mise en oeuvre particulier de l'invention, un procédé tel que décrit ci-dessus est caractérisé en ce que la caractérisation dudit courriel reçu par ledit terminal en tant que courriel dudit bulletin est déterminée en fonction de l'adresse de courriel de l'expéditeur dudit courriel reçu.

Ce mode de réalisation permet de déterminer qu'un courriel reçu par un terminal électronique correspond à un courriel d'un bulletin électronique d'information. Concrètement le procédé détermine qu'un courriel correspond à un courriel d'un bulletin électronique d'information en fonction de l'adresse de courriel de l'expéditeur du courriel reçu. C'est par exemple le cas lorsque l'adresse comprend un terme particulier comme newsletter, veille, publicité, catalogue, etc. ou que l'expéditeur correspond à un service connu de bulletin électronique d'information et/ou de veille en ligne.

Selon un mode de mise en oeuvre particulier de l'invention, un procédé tel que décrit ci-dessus est caractérisé en ce que la proposition de désabonnement est restituée en fonction d'au moins une action réalisée par l'utilisateur sur au moins un courriel reçu dudit bulletin. Ce mode de réalisation permet de conditionner une proposition de désabonnement à un bulletin électronique d'information par la réalisation d'une ou de plusieurs actions spécifiques de l'utilisateur au niveau d'un ou de plusieurs courriels du bulletin électronique d'information reçus. Concrètement le procédé observe l'activité de l'utilisateur afin d'identifier si l'utilisateur utilise / s'intéresse ou non au bulletin électronique d'information.

Selon un mode de mise en oeuvre particulier de l'invention, un procédé tel que décrit ci-dessus est caractérisé en ce que la proposition de désabonnement est suivie d'une étape de désabonnement audit bulletin lorsque ledit utilisateur valide ladite proposition.

Ce mode de réalisation permet d'automatiser le processus de désabonnement lorsque l'utilisateur le souhaite. Pour ce faire, le procédé peut, par exemple, simuler un clic sur un lien hypertexte de désabonnement présent dans un des courriels du bulletin électronique d'information reçus.

Selon un mode de mise en oeuvre particulier de l'invention, un procédé tel que décrit ci-dessus est caractérisé en ce que ladite au moins une action appartient au groupe comprenant au moins :
- la suppression ;
- la lecture ;
- le marquage ;
- l'ouverture et/ou la prévisualisation ;
- l'archivage ;
- l'impression ;
- la copie de tout ou partie du contenu dudit courriel ;
- le déplacement d'un curseur d'un dispositif de pointage au sein du contenu dudit courriel restitué au niveau d'un dispositif d'affichage ;
- le déplacement du contenu dudit courriel au niveau d'un dispositif d'affichage ;
- la sélection de tout ou partie du contenu dudit courriel ;
- le développement ou la mise en plein écran d'une fenêtre d'affichage restituant le contenu dudit courriel ;
- etc.

A noter que la sélection de tout ou partie du contenu dudit courriel peut correspondre au fait de surligner / sélectionner tout ou partie du contenu d'un des courriels du bulletin électronique d'information reçus et/ou de cliquer sur un lien hypertexte contenu dans un des courriels du bulletin électronique d'information reçus.

A noter également que le marquage peut correspondre au fait de donner une note d'intérêt (par exemple, 3 étoiles sur 5, ou « j'aime ») ou une priorité (haute ou basse) au contenu du courriel du bulletin d'information.

Selon un mode de mise en oeuvre particulier de l'invention, un procédé tel que décrit ci-dessus est caractérisé en ce que ladite au moins une action correspond à la lecture, par ledit utilisateur, dudit au moins un courriel reçu dudit bulletin et ce que la proposition de désabonnement est en outre restituée en fonction du temps passé par ledit utilisateur à lire le contenu dudit au moins un courriel dudit bulletin reçu.

Ce mode de réalisation permet de conditionner une proposition de désabonnement à un bulletin électronique d'information par le temps passé par l'utilisateur à lire le contenu du ou des courriels reçus du bulletin électronique d'information. Lorsque la durée de lecture, cumulée ou non, d'un ou de plusieurs courriels reçus du bulletin électronique d'information ne dépasse pas un seuil (par exemple en secondes, minutes, heures ou jours) pendant une période de temps prédéfinie, alors le procédé considère que l'utilisateur n'est pas ou peu intéressé par le contenu du bulletin électronique d'information et propose un désabonnement.

Selon un mode de mise en oeuvre particulier de l'invention, un procédé tel que décrit ci-dessus est caractérisé en ce que la proposition de désabonnement est restituée en fonction de la valeur d'un score d'intérêt associée audit bulletin.

Ce mode de réalisation permet de conditionner une proposition de désabonnement à un bulletin électronique d'information par la valeur d'un score d'intérêt. Ce score est, par exemple, obtenu en fonction de l'activité de l'utilisateur sur les courriels du bulletin électronique d'information reçus. Il peut être calculé en fonction :
- du temps de lecture, par l'utilisateur, du ou des courriels du bulletin électronique d'information ;
- des interactions sur le ou les contenus du ou des courriels du bulletin électronique d'information ;
- du délai de suppression du ou des courriels du bulletin électronique d'information. Par exemple, du délai moyen calculé entre la réception de plusieurs courriels du bulletin électronique d'information et leur suppression manuelle par l'utilisateur ;
- délai d'ouverture du ou des courriels du bulletin électronique d'information ;
- le type de marquage du ou des courriels du bulletin électronique d'information (par exemple importance haute ou faible, personnel, etc.
- etc.

Ce score peut également être obtenu par le procédé depuis un dispositif tiers comme une base de données.

L'invention concerne également un dispositif d'aide au désabonnement à un bulletin électronique d'information, ledit bulletin étant reçu par un terminal électronique d'un utilisateur sous la forme de courriels, caractérisé en ce qu'il comprend :
- un module de caractérisation d'un courriel reçu par ledit terminal en tant que courriel dudit bulletin ;
- un module de proposition de désabonnement audit bulletin restituée audit utilisateur.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention concerne également un programme d'ordinateur comportant des instructions pour la mise en oeuvre du procédé ci-dessus selon l'un quelconque des modes particuliers de réalisation décrits précédemment, lorsque ledit programme est exécuté par un processeur. Le procédé peut être mis en oeuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif d'aide au désabonnement à un bulletin électronique d'information et ce programme d'ordinateur présentent des caractéristiques et avantages analogues à ceux décrits précédemment en relation avec le procédé d'aide au désabonnement à un bulletin électronique d'information.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre de l'invention selon un mode particulier de réalisation de l'invention,
[Fig 2] La figure 2 illustre l'architecture d'un dispositif adapté pour la mise en oeuvre du procédé d'aide au désabonnement, selon un mode particulier de réalisation de l'invention,
[Fig 3] La figure 3 illustre les principales étapes du procédé d'aide au désabonnement selon un mode particulier de réalisation de l'invention.

### 5. Description d'un mode de réalisation de l'invention

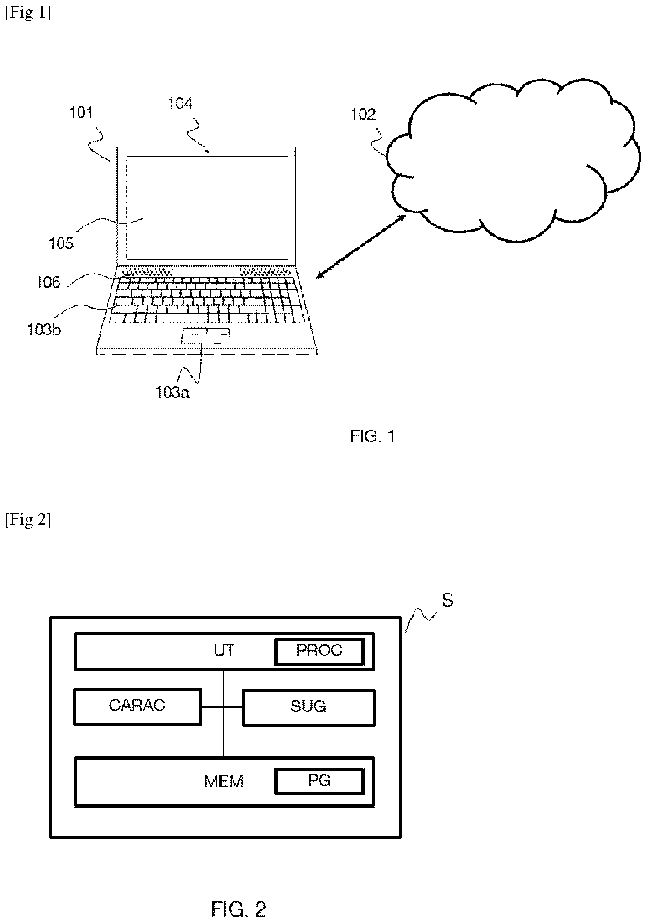

La figure 1 illustre un exemple d'environnement de mise en oeuvre de l'invention selon un mode particulier de réalisation. L'environnement représenté en figure 1 comprend au moins un terminal 101 qui intègre un dispositif d'aide au désabonnement apte à mettre en oeuvre le procédé d'aide au désabonnement selon la présente invention.

Le procédé d'aide au désabonnement peut fonctionner de manière permanente et autonome dès l'activation du dispositif ou bien à la suite d'une action utilisateur.

Le terminal 101 est par exemple un terminal de type smartphone (téléphone intelligent en anglais), tablette, télévision connectée, objet connecté, ordinateur de bord d'une voiture, ordinateur personnel, serveur, passerelle, etc.

Un ou plusieurs périphériques de restitution graphique/d'affichage (105) peuvent être compris par le terminal 101 ou bien connectés (connecté de façon filaire via un câble VGA, HDMI, USB, etc. ou bien sans fil via la technologie WiFi^{®}, Bluetooth^{®}, etc.). Ce ou ces périphériques de restitution peuvent être un écran d'affichage ou un vidéo projecteur.

Selon un mode particulier de réalisation de l'invention, le ou les périphériques de restitution graphique peuvent être connectés au terminal 101 via le réseau 102.

De même, un ou plusieurs périphériques d'entrée / de pointage (103a, 103b) peuvent être compris par le terminal 101 ou bien connectés (connectés de façon filaire via un câble VGA, HDMI, USB, etc. ou bien sans fil via la technologie WiFi^{®}, Bluetooth^{®}, etc.). Ce ou ces périphériques de pointage peuvent être un clavier, une souris, une surface tactile, une caméra (via les technologies d'oculométrie) (104), un microphone (via des commandes vocales) ou bien tout autre périphérique apte à fournir des données de localisation et d'action au niveau d'un élément affiché par un périphérique d'affichage du terminal 101.

Le terminal 101 peut en outre comprendre un ou plusieurs périphériques de restitution audio 106, par exemple un ou plusieurs haut-parleurs aptes à restituer vocalement un contenu de type texte.

Selon un mode particulier de réalisation de l'invention, le dispositif d'aide au désabonnement peut être situé dans le réseau et/ou réparti sur une ou plusieurs machines informatiques telles que des ordinateurs, des terminaux ou des serveurs.

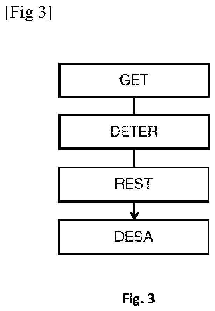

La figure 2 illustre un dispositif S configuré pour mettre en oeuvre le procédé d'aide au désabonnement selon un mode particulier de réalisation de l'invention. Le dispositif S a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé d'aide au désabonnement tel que décrit ultérieurement à l'appui de la figure 3, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé d'aide au désabonnement selon l'un quelconque des modes particuliers de réalisation décrits en relation avec la figure 3 et selon les instructions du programme d'ordinateur PG.

Le dispositif S comprend un module de caractérisation CARAC apte à déterminer / identifier qu'un courriel reçu par le terminal 101 provient d'un bulletin électronique d'information (en anglais newsletter). Pour ce faire, le module CARAC peut analyser le contenu et/ou le titre du courriel afin de rechercher la présence de mots clefs indiquant la nature du courriel. Par exemple, si le courriel comprend un contenu particulier comme un lien hypertexte nommé « se désabonner » ou bien un titre comprenant un ou plusieurs mots tels que « newsletter » ou « veille » alors le courriel peut être caractérisé comme courriel reçu en provenance d'un bulletin électronique d'information. Alternativement ou cumulativement, le module CARAC peut analyser l'adresse de l'expéditeur du courriel afin d'y rechercher des mots clefs tels que « newsletter » ou « veille » indiquant que le courriel provient d'un service de bulletin électronique d'information.

Le dispositif S comprend en outre un module de proposition /suggestion SUG apte à proposer un désabonnement à un bulletin d'information

La figure 3 illustre des étapes du procédé d'aide selon un mode particulier de réalisation de l'invention. Dans cet exemple le procédé est exécuté par le terminal 101.

Lors de la première étape (étape GET) le procédé obtient un courriel. Le courriel est par exemple obtenu depuis un serveur de messagerie ou bien depuis un espace de stockage numérique situé dans le réseau ou sur le terminal 101. Une fois le courriel obtenu, le procédé le traite afin de le caractériser (étape DETER), c'est à dire d'en déterminer sa nature. Plus exactement, le procédé cherche à déterminer si le courriel est un courriel émis par un service de bulletins électroniques d'information (newsletter). Cette caractérisation peut être réalisée par le procédé en fonction de la valeur d'un paramètre associé au courriel, paramètre indiquant sans ambiguïté qu'il s'agit ou non d'un courriel émis par un service de bulletins électroniques d'information (par exemple un paramètre dont la valeur est à « newsletter ») ou bien via l'analyse du contenu et/ou du titre du courriel. Concrètement, l'analyse peut correspondre à la recherche de mots clefs indiquant la nature du courriel. Par exemple, si le courriel comprend un contenu particulier comme un lien hypertexte nommé « se désabonner » ou bien un titre comprenant un ou plusieurs mots tels que « newsletter » ou « veille » alors le courriel peut être caractérisé comme un courriel reçu en provenance d'un bulletin électronique d'information.

Alternativement ou cumulativement, l'analyse peut porter sur l'adresse de l'expéditeur du courriel afin d'y rechercher des mots clefs tels que « newsletter » ou « veille » indiquant que le courriel provient d'un service de bulletins électroniques d'information (par exemple : newsletter.site@thecompany.com).

Alternativement ou cumulativement, l'analyse peut en outre porter sur la fréquence de réception des courriels reçus d'un même expéditeur. Par exemple, si tous les lundis l'utilisateur reçoit un courriel du même expéditeur, cela peut indiquer que le courriel correspond à un bulletin électronique d'information. Selon une variante, le procédé peut en outre comparer les titres des courriels reçus de cet expéditeur de sorte à vérifier que le titre des courriels ne change pas ou peu. En effet, les bulletins électroniques d'information utilisent généralement le même titre avec une partie variable qui peut correspondre au numéro de la semaine. Selon un mode de réalisation particulier, des techniques de calcul de distance de type « Levenshtein » peuvent également être utilisées pour mesurer la proximité / la similitude entre deux chaînes de caractères. Pour rappel, la distance de Levenshtein permet de donner une mesure de la différence entre deux chaînes de caractères. Elle est égale au nombre minimal de caractères qu'il faut supprimer, insérer ou remplacer pour passer d'une chaîne à l'autre.

Lorsque le courriel est déterminé comme courriel provenant d'un service de bulletin électronique d'information, le procédé restitue (étape REST) vocalement et/ou graphiquement à l'utilisateur du terminal 101 une proposition de désabonnement au bulletin électronique d'information qui a émis le ou les courriels reçus lors de l'étape GET.

Selon un mode particulier de réalisation de l'invention, lorsque l'utilisateur valide la proposition de désabonnement, le procédé prend en charge le désabonnement (étape DESA - automatisation du désabonnement) en réalisant les actions nécessaires au désabonnement de l'utilisateur au bulletin électronique d'information. Par exemple, le procédé peut simuler un clic sur un lien hypertexte de désabonnement présent dans un des courriels du bulletin électronique d'information. Le procédé peut également, lorsque le processus de désabonnement le demande, compléter un formulaire électronique avec des données de l'utilisateur, les données étant, par exemple, obtenues depuis le terminal 101 ou depuis un serveur situé dans le réseau.

Selon un mode particulier de réalisation de l'invention, la restitution (graphique et/ou vocale) de la proposition de désabonnement au bulletin électronique d'information est conditionnée par la réalisation d'une ou de plusieurs actions spécifiques de l'utilisateur au niveau d'un ou de plusieurs courriels du bulletin électronique d'information reçus. Concrètement le procédé observe l'activité de l'utilisateur afin d'identifier si l'utilisateur utilise / s'intéresse ou non aux courriels du bulletin électronique d'information. Les actions peuvent par exemple correspondre à :
- la suppression d'un courriel ;
- la lecture d'un courriel ;
- le marquage d'un courriel ;
- l'ouverture et/ou la prévisualisation d'un courriel ;
- l'archivage d'un courriel ;
- l'impression d'un courriel ;
- le copier/coller de tout ou partie du contenu d'un courriel du bulletin électronique d'information ;
- la navigation (déplacement du curseur d'un dispositif de pointage) au sein du contenu d'un courriel du bulletin électronique d'information restitué au niveau d'un dispositif d'affichage ;
- le déplacement du contenu dudit courriel au niveau d'un dispositif d'affichage ;
- le développement ou la mise en plein écran d'une fenêtre d'affichage restituant le contenu dudit courriel ;
- la sélection de tout ou partie du contenu d'un courriel du bulletin électronique d'information ;
- etc.

Ainsi, selon un premier exemple, lorsque l'utilisateur supprime ou marque comme « lu » sans ouvrir tout ou partie des courriels en provenance du bulletin électronique d'information, le procédé peut considérer que le contenu de ce ou ces courriels n'intéresse pas l'utilisateur. Le procédé propose alors, graphiquement et/ou vocalement, à l'utilisateur de se désabonner du bulletin électronique d'information.

Selon un deuxième exemple, lorsque l'utilisateur ouvre le ou les courriels, les lit et/ou les archive dans un répertoire informatique et / ou les imprime, le procédé peut considérer que le contenu de ce ou ces courriels intéresse l'utilisateur. Dans ce cas, le procédé ne propose pas à l'utilisateur de se désabonner du bulletin électronique d'information.

Alternativement ou cumulativement, la restitution de la proposition de désabonnement au bulletin électronique d'information peut être conditionnée par le temps passé (en seconde(s), minute(s), heure(s), jour(s)) par l'utilisateur à lire le contenu et/ou à écouter le contenu vocalisé du ou des courriels du bulletin électronique d'information. Le temps de lecture est par exemple déterminé via une technique d'oculométrie, c'est-à-dire l'étude du regard de l'utilisateur (en anglais « eye tracking ») capté par la caméra 104, couplée à un évènement obtenu depuis le terminal 101 (par exemple un évènement du système d'exploitation) indiquant qu'un courriel du bulletin électronique d'information est affiché à un endroit donné de la surface d'affichage du périphérique d'affichage 105. Le procédé peut alors évaluer le temps passé par l'utilisateur à lire un courriel du bulletin électronique d'information restitué par le périphérique d'affichage 105. Ainsi, lorsque la durée de lecture, cumulée ou non, d'un ou de plusieurs courriels reçus du bulletin électronique d'information ne dépasse pas un seuil (par exemple 5 minutes) pendant une période de temps prédéfinie (par exemple 6 mois), alors le procédé peut considérer que l'utilisateur n'est pas ou peu intéressé par le contenu du bulletin électronique d'information. Dans ce cas, le procédé propose à l'utilisateur de se désabonner du bulletin électronique d'information. A noter que la période de temps prédéfinie peut correspondre à une fenêtre de temps glissante (le début de la période/ fenêtre de temps peut varier dans le temps) et être de taille/durée variable ou fixe.

A noter que la sélection de tout ou partie du contenu peut correspondre au fait de surligner tout ou partie du contenu d'un des courriels du bulletin électronique d'information reçus et/ou de cliquer sur un lien hypertexte contenu dans un des courriels du bulletin électronique d'information reçus.

Selon un mode particulier de réalisation de l'invention, la restitution (graphique et/ou vocale) de la proposition de désabonnement au bulletin électronique d'information est conditionnée par la valeur d'un score d'intérêt. Ce score est, par exemple, obtenu en fonction de l'activité de l'utilisateur constatée au niveau des courriels du bulletin électronique d'information reçus. Il peut être calculé en fonction :
- du temps de lecture, par l'utilisateur, du ou des courriels du bulletin électronique d'information ;
- des interactions sur le ou les contenus du ou des courriels du bulletin électronique d'information ;
- du délai de suppression du ou des courriels du bulletin électronique d'information. Par exemple, du délai moyen calculé entre la réception de plusieurs courriels du bulletin électronique d'information et leur suppression manuelle par l'utilisateur ;
- délai d'ouverture du ou des courriels du bulletin électronique d'information ;
- le type de marquage du ou des courriels du bulletin électronique d'information (par exemple importance haute ou faible, personnel, etc.
- etc.

Nous allons maintenant décrire le calcul d'un score d'intérêt dans le cas où 4 courriels du bulletin électronique d'information ont déjà été obtenus/reçus par le terminal 101.

| Action | Courriel n°1 | Courriel n°2 | Courriel n°3 | Courriel n°4 | Total |
|---|---|---|---|---|---|
| lecture | 2 | 1 | 1 | 0 | 4 |
| archivage | 0 | 0 | 1 | 0 | 1 |
| suppression | 0 | -1 | 0 | -1 | -2 |
| impression | 1 | 0 | 0 | 0 | 1 |
| C | | | | | 1 |

Le tableau ci-dessus indique le nombre de fois qu'une action donnée a été réalisée par l'utilisateur sur chaque courriel reçu du bulletin électronique d'information périodique. Par exemple, l'utilisateur a lu (entièrement ou partiellement) deux fois le premier courriel, une fois le deuxième et le troisième courriel et n'a pas lu le quatrième courriel. Une note globale de lecture du bulletin électronique d'information est alors calculée par le procédé à 4 (2+1+1+0).

Le même exercice peut être réalisé pour les actions d'archivage, de suppression et d'impression.

A noter qu'un courriel peut être considéré comme lu par l'utilisateur lorsque le temps qu'il passe à lire le contenu du courriel dépasse un seuil (par exemple 1 minute).

A noter également que l'action de suppression est comptabilisée de manière négative. En effet, la suppression indique un potentiel désintérêt de l'utilisateur. Ainsi, la note globale de suppression calculée par le procédé est égale à -2 (0-1+0-1) les courriels 2 et 4 ayant été supprimés par l'utilisateur.

Bien entendu, cette liste d'actions est donnée à titre purement indicatif et n'est nullement limitative. De nombreuses autres actions de l'utilisateur peuvent être considérées par le procédé pour le calcul du score d'intérêt. De même, d'autres valeurs et pondérations éventuelles associées à chaque action peuvent être choisies.

Le procédé calcule ensuite le score d'intérêt C. Pour ce faire le procédé calcule la somme S des notes globales des actions et la divise par le nombre N de courriels.

Le score d'intérêt est donc égale à : C = S/N.

Dans cet exemple, le score d'intérêt correspond à (4 + 1 - 2 + 1) / 4 soit C = 1. Ainsi, le score d'intérêt indique qu'il y a eu, en moyenne, une action prouvant un intérêt de l'utilisateur réalisée sur chaque courriel du bulletin électronique d'information.

Si la valeur du score d'intérêt est en dessous d'un seuil prédéterminé, ce dernier étant par exemple fixé à 1, le procédé peut proposer à l'utilisateur de se désabonner du bulletin électronique d'information. Dans le cas décrit ci-dessus le score d'intérêt est égal à 1. Le score d'intérêt n'étant pas inférieur à 1, le procédé considère alors que le bulletin électronique d'information intéresse l'utilisateur et qu'il n'y a pas lieu de lui proposer de se désabonner.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention. Selon d'autres modes particuliers de réalisation de l'invention, le score d'intérêt peut être calculé par une intelligence artificielle apte à apprendre au fil des mois un comportement de l'utilisateur (lecture, archivage, suppression, etc.) au niveau des courriels du bulletin électronique d'information.

Selon un autre mode de réalisation de l'invention le score d'intérêt peut être calculé en fonction d'actions et / ou de séquence d'actions. Par exemple, le procédé peut déterminer que l'utilisateur a lu un courriel uniquement si la lecture de son contenu par l'utilisateur dépasse une durée prédéfinie et est associée à une zone /partie particulière du contenu (par exemple l'article principal situé dans le courriel du bulletin d'information). De même, lorsque la lecture d'un courriel par l'utilisateur dépasse une durée prédéfinie et que celui-ci supprime ensuite le courriel en question, l'action de suppression peut alors être ignorée par le procédé pour le calcul du score d'intérêt. En effet, suite à sa lecture, l'utilisateur a bien montré un intérêt concernant la publication / le courriel du bulletin d'information et l'action de suppression n'est alors pas pertinente dans le calcul du score d'intérêt.

## Revendications

1. Procédé d'aide au désabonnement à un bulletin électronique d'information, ledit bulletin étant reçu par un terminal électronique d'un utilisateur sous la forme de courriels, ledit procédé étant mis en oeuvre par un dispositif d'aide au désabonnement et **caractérisé en ce qu'**il comprend les étapes suivantes :
- caractérisation (DETER) d'un courriel reçu par ledit terminal en tant que courriel dudit bulletin ;
- proposition (REST) de désabonnement audit bulletin restituée audit utilisateur.

2. Procédé selon la revendication 1 **caractérisé en ce que** la caractérisation dudit courriel reçu par ledit terminal en tant que courriel dudit bulletin est déterminée en fonction du résultat d'une analyse du contenu et/ou du titre dudit courriel reçu.

3. Procédé selon la revendication 1 **caractérisé en ce que** la caractérisation dudit courriel reçu par ledit terminal en tant que courriel dudit bulletin est déterminée en fonction de l'adresse de courriel de l'expéditeur dudit courriel reçu.

4. Procédé selon la revendication 1 **caractérisé en ce que** la proposition de désabonnement est restituée en fonction d'au moins une action réalisée par l'utilisateur sur au moins un courriel reçu dudit bulletin.

5. Procédé selon la revendication 1 **caractérisé en ce que** la proposition de désabonnement est suivie d'une étape de désabonnement (DESA) audit bulletin lorsque ledit utilisateur valide ladite proposition.

6. Procédé selon la revendication 4 **caractérisé en ce que** ladite au moins une action appartient au groupe comprenant au moins :
- la suppression ;
- la lecture ;
- le marquage ;
- l'ouverture et/ou la prévisualisation ;
- l'archivage ;
- l'impression ;
- la copie de tout ou partie du contenu dudit courriel ;
- le déplacement d'un curseur d'un dispositif de pointage au sein du contenu dudit courriel restitué au niveau d'un dispositif d'affichage ;
- le déplacement du contenu dudit courriel au niveau d'un dispositif d'affichage ;
- le développement ou la mise en plein écran d'une fenêtre d'affichage restituant le contenu dudit courriel au niveau d'un dispositif d'affichage ;
- la sélection de tout ou partie du contenu dudit courriel.

7. Procédé selon la revendication 4 **caractérisé en ce que** ladite au moins une action correspond à la lecture, par ledit utilisateur, dudit au moins un courriel reçu dudit bulletin et ce que la proposition de désabonnement est en outre restituée en fonction du temps passé par ledit utilisateur à lire le contenu dudit au moins un courriel dudit bulletin reçu.

8. Procédé selon la revendication 1 **caractérisé en ce que** la proposition de désabonnement est restituée en fonction de la valeur d'un score d'intérêt associée audit bulletin.

9. Dispositif d'aide au désabonnement à un bulletin électronique d'information périodique, ledit bulletin étant reçu par un terminal électronique d'un utilisateur sous la forme de courriels, **caractérisé en ce qu'**il comprend :
- un module de caractérisation (CARAC) d'un courriel reçu par ledit terminal en tant que courriel dudit bulletin ;
- un module de proposition (SUG) de désabonnement audit bulletin restituée audit utilisateur.

10. Terminal ou serveur **caractérisé en ce qu'**il comprend un dispositif selon la revendication 9.

11. Programme d'ordinateur comportant des instructions pour la mise en oeuvre du procédé selon l'une quelconque des revendications 1 à 8, lorsque le programme est exécuté par un processeur.
